# EUROPÄISCHE PATENTSCHRIFT

(11) **EP 0 971 097 B1**
(45) Veröffentlichungstag und Bekanntmachung des Hinweises auf die Patenterteilung: **25.02.2004**
(21) Anmeldenummer: 99810506.8
(22) Anmeldetag: 09.06.1999
(51) Int. Cl.: F01L 3/02, F01L 3/06

(54) **Ventil für eine Brennkraftmaschine**
Valve for an internal combustion engine
Soupape pour moteur à combustion interne

(30) Priorität: 08.07.1998 EP 98810648
(43) Veröffentlichungstag der Anmeldung: 12.01.2000
(73) Patentinhaber: Wärtsilä Schweiz AG, 8401 Winterthur (CH)
(72) Erfinder: Brunner, Heinrich, 8404 Winterthur (CH); Bitterli, Alois, 8492 Wila (CH)
(74) Vertreter: Sulzer Management AG

(56) Entgegenhaltungen:
- EP-A- 0 657 629
- US-A- 4 433 652

## Beschreibung

Die Erfindung betrifft ein Ventil, insbesondere ein Auslassventil, für eine Brennkraftmaschine gemäss dem Oberbegriff des unabhängigen Patentanspruchs. Im speziellen betrifft die Erfindung ein solches Ventil für einen Dieselmotor.

Ein solches Ventil ist z.B. aus US 4 433 652 A bekannt.

Die Ein- und Auslassventile von Brennkraftmaschinen unterliegen im Betriebszustand enorm hohen thermischen und korrosiven Belastungen. Insbesondere bei den Auslassventilen sind diese Belastungen sehr hoch, weil die Auslassventile von den heissen Verbrennungsgasen umströmt werden, die auf die Dauer lokale Beschädigungen des Ventils verursachen können. Aber auch die mechanischen Belastungen, wie beispielsweise die dynamischen Belastungen, welche durch die Öffnungs- und Schliessbewegungen des Ventils verursacht werden, stellen hohe Anforderungen an das Material, aus dem die Ventile hergestellt sind. Die mechanischen Belastungen sind speziell bei Dieselmotoren besonders ausgeprägt, weil diese üblicherweise mit höheren Zünddrücken arbeiten als beispielsweise Ottomotoren.

Um diesen hohen Beanspruchungen dauerhaft standzuhalten, werden die Ventilkörper solcher Ventile üblicherweise aus sehr hochwertigen und teuren Legierungen hergestellt. Speziell für die Auslassventile von Dieselmotoren haben sich Nickelbasislegierungen, wie beispielsweise die unter den Bezeichnungen Nimonic 80A (Warenzeichen) und Nimonic 81 (Warenzeichen) vertriebenen, bewährt. Die Verwendung solcher oder ähnlicher Legierungen bringt jedoch erhebliche Kosten mit sich. Speziell bei Grossdieselmotoren, die z. B. zum Antreiben von Schiffen eingesetzt werden, und bei denen der Ventilkörper eines Auslassventils eine Gesamtlänge von mehr als einem Meter und einen Durchmesser des Ventiltellers von beispielsweise über einem halben Meter aufweisen kann, stellen die Materialkosten einen ganz wesentlichen Faktor dar, der unter wirtschaftlichen Aspekten nachteilig ist.

Es ist daher eine Aufgabe der Erfindung, ein wirtschaftlicheres Ventil, insbesondere ein Auslassventil, für eine Brennkraftmaschine bereitzustellen, das mit wesentlich geringerem Kostenaufwand herstellbar ist und trotzdem den hohen Beanspruchungen dauerhaft standhalten kann. Insbesondere soll ein solches Ventil vorgeschlagen werden, das für einen Grossdieselmotor geeignet ist.

Das diese Auftgabe lösende Ventil ist durch die Merkmale des unabhängigen Anspruchs gekennzeichnet.

Erfindungsgemäss wird also Ventil für eine Brennkraftmaschine, insbesondere für einen Dieselmotor, vorgeschlagen, mit einem Ventilkörper, der einen Ventilteller und einen Ventilschaft aufweist; der Ventilkörper umfasst ein Unterteil und ein Oberteil, welches sich in axialer Richtung an das Unterteil anschliesst, wobei das Oberteil und das Unterteil mittels zweier mechanischer Verbindungen aneinander befestigt sind.

Durch die Massnahme, ein Oberteil und ein Unterteil vorzusehen, ist es möglich, denjenigen Bereich des Ventilkörpers, der den Ventilteller umfasst und der im Betrieb den höhsten thermischen und korrosiven Belastungen ausgesetzt ist, aus einem hochwertigen, diesen Belastungen gewachsenen Material, wie beispielsweise der Nickelbasislegierung Nimonic (Warenzeichen), herzustellen. Der dem Ventilteller abgewandten Bereich, der zumindest einen Teil des Ventilschafts umfasst und der im Betrieb nicht derart hohen thermischen Belastungen ausgesetzt ist, kann dagegen aus einem deutlich preisgünstigeren Material, beispielsweise einem der üblichen Stähle für Ventile (Ventilstahl) hergestellt werden. Somit reduziert sich der Materialanteil der hochwertigen und teuren Legierung, sodass die Gesamtherstellkosten des Ventils wesentlich verringert werden können, ohne dass dafür Zugeständnisse an die Funktion oder die Lebensdauer des Ventils gemacht werden müssen.

Durch die Kombination zweier mechanischer Verbindungen ist gewährleistet, dass das Oberteil und das Unterteil ausreichend stark aneinander fixiert sind, um den hohen mechanischen Belastungen, insbesondere den dynamischen Belastungen, die aus den Öffnungs- und Schliessbewegungen des Ventilkörpers resultieren, dauerhaft standzuhalten. Da diese mechanischen Belastungen auf die zwei Verbindungen aufgeteilt werden, die sich somit gegenseitig entlasten, ist die Gefahr eines Bruchs im Bereich der Grenzfläche zwischen dem Ober- und dem Unterteil praktisch nicht mehr vorhanden. Die Kombination der beiden mechanischen Verbindungen ist derart stabil und robust, dass der Ventilkörper des erfindungsgemässen Ventils auch den mechanischen Belastungen im Auslassventil eines Grossdieselmotors dauerhaft standhalten kann.

Vorzugsweise umfasst eine der beiden mechanischen Verbindungen eine Hülse die auf den Ventilschaft aufgeschrumpft ist und so angeordnet ist, dass sie die andere der beiden mechanischen Verbindungen umschliesst. Diese Massnahme ist vorteilhaft, weil ein Teil der mechanischen Beanspruchung von der den Ventilschaft umschliessenden Hülse aufgenommen wird, das heisst ein Anteil der wirkenden Kräfte wird über die aufgeschrumpfte Hülse vom Ober- zum Unterteil - bzw. umgekehrt - geleitet, sodass die zweite mechanische Verbindung entlastet wird.

Gemäss einer besonders bevorzugten Ausgestaltung ist am Ventilschaft im Bereich der beiden axialen Enden der Hülse jeweils eine in Umfangsrichtung des Ventilschafts verlaufende Nut oder eine Verjüngung vorgesehen, sodass die axialen Enden der Hülse kontaktfrei bezüglich des Ventilschafts sind. Folglich ist die wirksame Länge der Schrumpfverbindung zwischen der Hülse einerseits und dem Ober- und dem Unterteil andererseits in axialer Richtung kleiner als die gesamte Länge der Hülse in axialer Richtung, sodass die axialen Enden der Hülse frei in dem Sinne sind, dass sie nicht am Ventilschaft anliegen. Diese Massnahme gewährleistet eine besonders günstige Kraftübertragung zwischen Ober- und Unterteil über die Hülse.

Eine weitere bevorzugte Massnahme besteht darin, dass die Hülse Drehflügel zum Rotieren des Ventilkörpers um seine Längsachse aufweist. Häufig, insbesondere bei Grossdieselmotoren, sind am Ventilschaft des Auslassventils Drehflügel vorgesehen, um den Ventilkörper im Betriebszustand durch die Verbrennungsgase um seine Längsachse zu rotieren, damit eine bezüglich der Umfangsrichtung gleichmässige Beanspruchung des Ventiltellers und der mit ihm zusammenwirkenden Gegenfläche gewährleistet ist. Die Massnahme, diese Drehflügel auf der Hülse vorzusehen hat den Vorteil, konstruktiv besonders einfach und wenig aufwendig zu sein, weil die Hülse sowohl als Träger für die Drehflügel als auch als mechanische Verbindung zwischen dem Ober- und dem Unterteil des Ventilkörpers dient.

Bevorzugt ist eine der beiden mechanischen Verbindungen zwischen dem Ober- und dem Unterteil eine Schweissverbindung, insbesondere eine Reibschweissverbindung, weil dies eine besonders stabile und fertigungstechnisch relativ unkompliziert realisierbare Verbindung ist.

Gemäss einer ebenfalls aufgrund ihrer mechanischen Belastbarkeit bevorzugten Variante umfasst eine der beiden mechanischen Verbindungen einen am Ober- oder am Unterteil vorgesehenen Zapfen, der mit einer im Unter- oder Oberteil vorgesehenen Ausnehmung zusammenwirkt. Die Wirkverbindung zwischen dem Zapfen und der Ausnehmung kann dabei ebenfalls als Schrumpfverbindung ausgestaltet sein.

In einer weiteren Variante ist eine der beiden mechanischen Verbindungen als Gewindeverbindung oder als Bajonettverschluss ausgestaltet. Beispielsweise kann die vorangehend erwähnte Wirkverbindung zwischen dem Zapfen und der Ausnehmung als Gewindeverbindung oder Bajonettverschluss ausgestaltet sein.

Bei dem erfindungsgemässen Ventil sind das Ober- und das Unterteil des Ventilkörpers mittels der Kombination aus zwei mechanischen Verbindungen aneinander befestigt. Aufgrund der praktischen Erfahrung und aus herstellungstechnischen Gründen sind dabei die folgenden Kombinationen von jeweils zwei mechanischen Verbindungen besonders bevorzugt:
- Schweiss-, insbesondere Reibschweissverbindung, und aufgeschrumpfte Hülse
- Schrumpfverbindung mittels Zapfen und Ausnehmung und aufgeschrumpfte Hülse
- Gewindeverbindung und aufgeschrumpfte Hülse
- Bajonettverschluss und aufgeschrumpfte Hülse.

Weitere vorteilhafte Massnahmen und bevorzugte Ausgestaltungen der Erfindung ergeben sich aus den abhängigen Ansprüchen.

Im folgenden wird die Erfindung anhand der Zeichnung und anhand von Ausführungsbeispielen näher erläutert. In der schematischen, nicht massstäblichen Zeichnung, in der identische oder von der Funktion gleichwertige Teile mit den gleichen Bezugszeichen versehen sind, zeigen:
- Fig. 1:: einen Ventilkörper eines ersten Ausführungsbeispiels des erfindungsgemässen Ventils (teilweise im Schnitt), und
- Fig. 2:: einen Ventilkörper eines zweiten Ausführungsbeispiels des erfindungsgemässen Ventils (teilweise im Schnitt).

In der folgenden Beschreibung wird mit beispielhaftem Charakter auf ein Auslassventil für den Zylinder eines längsgespülten Zweitakt-Grossdieselmotors, der zum Beispiel als Antriebsaggregat von Schiffen eingesetzt wird, Bezug genommen. Es versteht sich jedoch, dass die Erfindung nicht auf solche Motoren beschränkt ist. Das erfindungsgemässe Ventil ist auch für andere Motorentypen, wie Viertakt-Dieselmotoren, sonstige Dieselmotoren und Brennkraftmaschinen im allgemeinen geeignet. Die spezielle Ausgestaltung des Ventils, wie beispielsweise seine Grösse und seine Abmessungen oder die verwendeten Materialien, richtet sich dabei jeweils nach dem konkreten Verwendungszweck. Ferner kann das erfindungsgemässe Ventil in sinngemäss gleicher Weise auch als Einlassventil ausgestaltet sein.

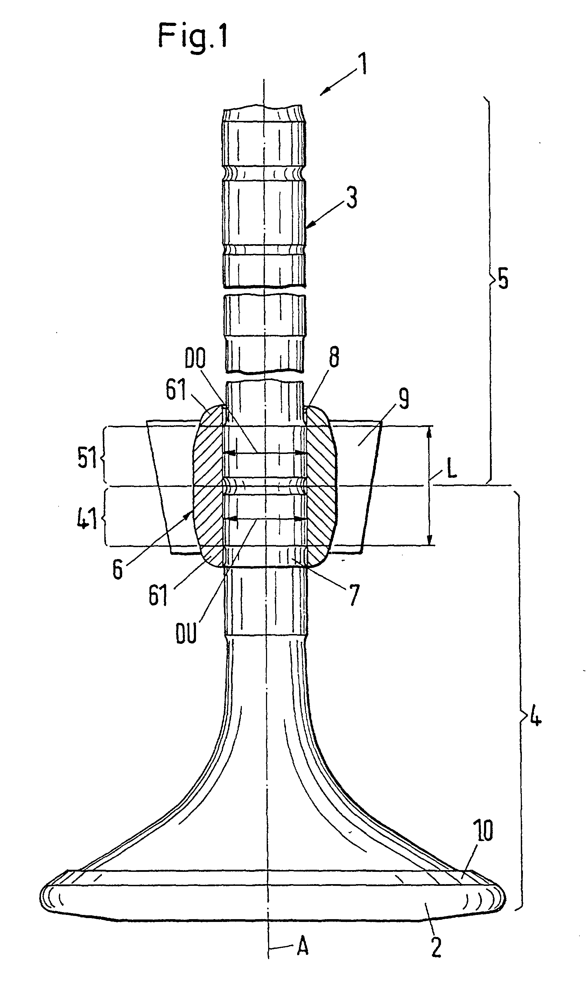

Fig. 1 zeigt einen Ventilkörper 1 eines ersten Ausführungsbeispiels des erfindungsgemässen Ventils. Der Ventilkörper 1 hat einen Ventilteller 2, der im eingebauten Zustand mit einem nicht dargestellten Ventilsitz zusammenwirkt, sowie einen Ventilschaft 3, der sich an den Ventilteller 2 anschliesst. Der Ventilkörper 1 hat ein Unterteil 4, das den Ventilteller 2 sowie einen Teil des Ventilschafts 3 umfasst, und ein Oberteil 5, das den Rest des Ventilschafts 3 umfasst, das heisst, das Oberteil 5 schliesst sich in axialer Richtung, womit die Richtung der Längsachse A des Ventilkörpers 1 gemeint ist, an das Unterteil 4 an. Das Oberteil 5 und das Unterteil 4 grenzen also im Bereich des Ventilschafts 1 aneinander.

Durch diese Massnahme, den Ventilkörper 1 aus zwei Teilen zusammenzusetzen, kann das Unterteil 4, das im Betriebszustand den höchsten thermischen und korrosiven Belastungen ausgesetzt ist, aus einem sehr hochwertigen, thermisch belastbaren Material hergestellt werden und das Oberteil, das räumlich weiter vom Verbrennungsraum entfernt ist, aus einem preisgünstigeren Material. Dadurch lässt sich das Ventil wesentlich kostengünstiger herstellen.

Das Unterteil 4 kann beispielsweise aus einer thermisch stark belastbaren Nickelbasislegierung, wie Nimonic 80A (Warenzeichen) oder Nimonic 81, oder aus einer der anderen hochwertigen Legierungen, die üblicherweise in der Ventiltechnik Verwendung finden, hergestellt werden. Das Oberteil 5 kann aus einem Stahl gefertigt werden, der üblicherweise für Ventile bzw. für Auslassventile verwendet wird. Solche Stähle sind unter dem Sammelbegriff Ventilstahl hinreichend bekannt. Es können sowohl ferritische als auch austenitische Stähle verwendet werden. Auch die Verwendung von Nickelbasislegierungen ist möglich.

Erfindungsgemäss sind das Oberteil 5 und das Unterteil 4 mittels zweier mechanischer Verbindungen aneinander befestigt. Durch die Kombination von zwei mechanischen Verbindungen ist die gegenseitige Befestigung von dem Oberteil 5 und dem Unterteil 4 ausreichend stabil, um insbesondere den hohen dynamischen Belastungen, die beim Öffnen und Schliessen des Ventils vor allem im Ventilschaft 3 auftreten, dauerhaft und mit grosser Sicherheit standzuhalten.

Bei dem ersten Ausführungsbeispiel sind die beiden mechanischen Verbindungen durch eine Schweissverbindung und eine auf den Ventilschaft 3 aufgeschrumpfte Hülse 6, die als Presshülse dient, realisiert. Durch die beiden unterschiedlichen mechanischen Verbindungen ist der Ventilschaft 3 ausreichend stabil und robust, sodass er auch den enormen Beanspruchungen, die in den Auslassventilen von Grossdieselmotoren auftreten, problemlos und dauerhaft standhält.

Bei der Herstellung des Ventilkörpers 1 gemäss dem ersten Ausführungsbeispiel werden zunächst das Oberteil 5 und das Unterteil 4 an ihrer Grenzfläche miteinander verschweisst. Aus fertigungstechnischen Gründen wird hierfür das Reibschweissen bevorzugt. Prinzipiell eigen sich aber auch andere Schweissverfahren. Nachdem die Schweissverbindung erfolgt ist und gegebenenfalls nachbearbeitet wurde, wird die Hülse 6 über den Ventilschaft 3 geschoben und auf diesen aufgeschrumpft. Dabei wird die Hülse 6 so positioniert, dass sie die Schweissverbindung in Umfangsrichtung umschliesst und dass sich die Schweissverbindung bezüglich der axialen Richtung ungefähr in der Mitte der Hülse 6 befindet. Im Betriebszustand wird somit ein wesentlicher Anteil der mechanischen, insbesondere der dynamischen, Belastung über die Hülse 6 geleitet, sodass die Schweissverbindung entlastet wird.

Die axialen Endbereiche 51, 41 des Oberteils 5 und des Unterteils 4, die im zusammengefügten Zustand aneinander grenzen, sind bezüglich ihres Durchmessers DO bzw. DU so aufeinander abgestimmt, dass bei der Betriebstemperatur des Ventils eine im wesentlichen gleich starke bzw. gleich gute Schrumpfverbindung zwischen dem Oberteil 5 und der Hülse 6 einerseits sowie dem Unterteil 4 und der Hülse 6 andererseits resultiert. Mit den axialen Endbereichen 51, 41 sind dabei diejenigen Bereiche des Oberteils 5 bzw. des Unterteils 4 gemeint, die jeweils die Schrumpfverbindung mit der Hülse 6 bilden. Haben die Materialien, aus denen das Oberteil 5 und das Unterteil 4 hergestellt sind, unterschiedliche thermische Expansionseigenschaften, so müssen die Durchmesser DO bzw. DU ihrer aneinander grenzenden Endbereiche 51, 41 bei der Herstellung im allgemeinen unterschiedlich bemessen werden, damit sie bei der Betriebstemperatur im wesentlichen den gleichen Durchmesser aufweisen.

Hat beispielsweise das Material, aus dem das Oberteil 5 hergestellt ist, eine grössere thermische Expansion als das Material aus dem das Unterteil 4 hergestellt ist, so ist der Durchmesser DO des Endbereichs 51 des Oberteils 5 so bemessen, dass er im kalten Zustand des Ventilkörpers 1 geringfügig kleiner ist als der Durchmesser DU des Endbereichs 41 des Unterteils 4.

Eine weitere vorteilhafte Massnahme besteht darin, dass die Länge der Hülse 6 in axialer Richtung grösser ist als die Wirklänge L der gesamten Schrumpfverbindung zwischen der Hülse 6 und dem Oberteil 5 bzw. dem Unterteil 4. Das heisst, dass die axialen Enden 61 der Hülse 6 kontaktfrei bezüglich des Ventilschafts 3 sind. Diese Massnahme ist auf der einen Seite durch eine in Umfangsrichtung verlaufende Nut 7 im Unterteil 4 und auf der anderen Seite durch eine Verjüngung 8 im Oberteil 5 realisiert. Die Nut 7 und die Verjüngung 8 schliessen sich in axialer Richtung jeweils unmittelbar an die Endbereiche 41, 51 des Unterteils 4 bzw. des Oberteils 5 an. Durch diese Massnahme sind die axialen Enden 61 der Hülse 6 frei in dem Sinne, dass sie nicht am Ventilschaft 1 anliegen. Somit können die axialen Enden 61 der Hülse 6 beim Aufschrumpfen etwas stärker schrumpfen als der Rest der Hülse 6, sodass sich die axialen Enden 61 leicht in die Nut 7 bzw. die Verjüngung 8 hinein krümmen. Dies wirkt sich zum einen positiv auf die Kraftübertragung zwischen der Hülse 6 und dem Ventilschaft 1 aus, und zum anderen wirkt die Hülse 6 als zusätzliche Verklammerung, welche die Sicherheit der Verbindung zwischen Oberteil 4 und Unterteil 5 erhöht.

Auf der Hülse 6 sind ferner Drehflügel 9 vorgesehen, die in an sich bekannter Weise im Betriebszustand von den Verbrennungsgasen angeströmt werden und so den Ventilkörper 1 um seine Längsachse A drehen. Die Drehflügel 9 auf der Hülse 6 vorzusehen, ist eine besonders platzsparende und konstruktiv einfache Variante. Es ist jedoch auch möglich, die Drehflügel 9 an einer anderen Stelle des Ventilschafts 3 anzuordnen und die Hülse 6 nur als Verbindung zwischen dem Oberteil 5 und dem Unterteil 4 zu verwenden.

Weitere Massnahmen, die an sich aus der Ventiltechnik bekannt sind, können natürlich auch bei dem erfindungsgemässen Ventil vorgesehen sein. So kann beispielsweise die Sitzpartie des Ventilkörpers, die im eingebauten Zustand mit dem Ventilsitz zusammenwirkt, zur Erhöhung der Widerstandsfähigkeit mit einer Schicht 10 versehen sein. Diese besteht beispielsweise, wie an sich bekannt, aus Stellit oder einer Nickelbasislegierung.

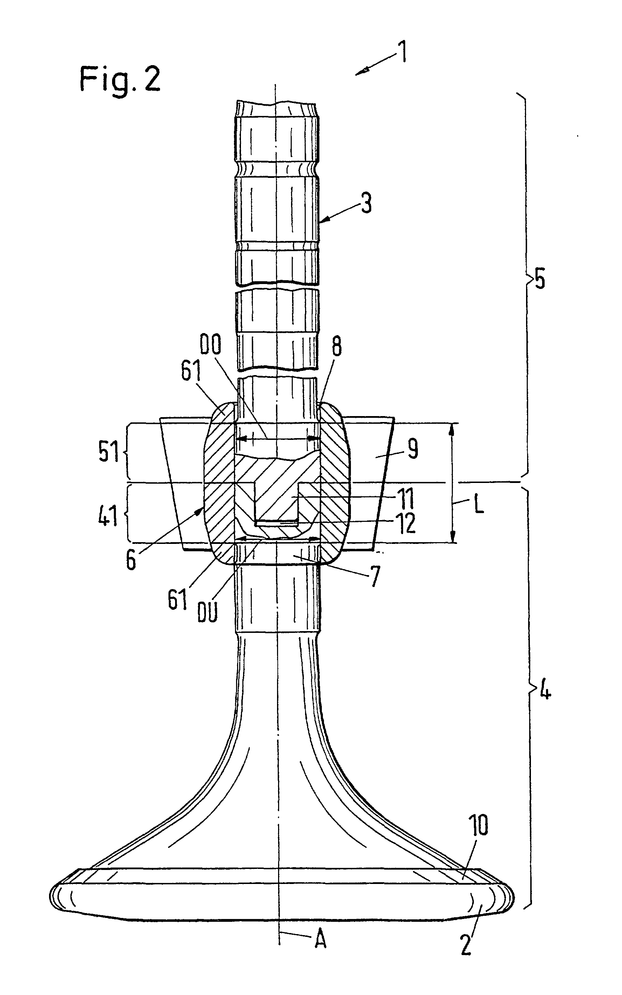

Fig. 2 zeigt den Ventilkörper 1 eines zweiten Ausführungsbeispiels. Im folgenden wird auf die Unterschiede zum ersten Ausführungsbeispiel eingangen. Ansonsten gelten die Erläuterungen bezüglich des ersten Ausführungsbeispiels in sinngemäss gleicher Weise auch für das zweite Ausführungsbeispiel.

Bei dem zweiten Ausführungsbeispiel sind die beiden mechanischen Verbindungen durch zwei Schrumpfverbindungen realisiert. Die eine der Verbindungen erfolgt in analoger Weise wie vorne beschrieben mittels der auf den Ventilschaft 3 aufgeschrumpften Hülse 6. Die andere mechanische Verbindung umfasst einen Zapfen 11, der am axialen Endbereich 51 des Oberteils 5 vorgesehen ist und sich in axialer Richtung erstreckt, sowie eine Ausnehmung 12, die im axialen Endbereich 41 des Unterteils 4 vorgesehen ist und so bemessen ist, dass sie auf den Zapfen 11 aufgeschrumpft werden kann. Bei der Herstellung wird das Unterteil 4 im Bereich der Ausnehmung 12 erwärmt und der Zapfen 11 wird in die Ausnehmung 12 eingeführt. Beim anschliessenden Abkühlen zieht sich die Ausnehmung 12 zusammen und bildet somit eine Schrumpfverbindung mit dem Zapfen 11. Anschliessend wird dann die Hülse 6 auf den Ventilschaft aufgeschrumpft, wobei sie so plaziert wird, dass sie die andere Schrumpfverbindung, das heisst den Zapfen 11 und die Ausnehmung 12 in Umfangsrichtung umschliesst.

Natürlich ist es auch möglich, den Zapfen 11 am Unterteil 4 vorzusehen und die Ausnehmung 12 am Oberteil 5.

Eine Variante des zweiten Ausführungsbeispiels besteht darin, dass anstelle der Schrumpfverbindung eine Gewindeverbindung als Wirkverbindung zwischen dem Zapfen 11 und der Ausnehmung 12 vorgesehen ist. Dazu weisen beispielsweise der Zapfen 11 an seiner äusseren Begrenzungsfläche und die Ausnehmung 12 an ihrer inneren Begrenzungsfläche jeweils ein Gewinde auf, sodass der Zapfen 11 in die ausnehmung 12 geschraubt werden kann.

Eine weitere Variante besteht darin, dass der Zapfen 11 und die Ausnehmung 12 so ausgestaltet sind, dass sie einen Bajonettverschluss bilden.

Ausser den erläuterten bevorzugten Kombinationen von jeweils zwei mechanischen Verbindungen zwischen dem Oberteil 5 und dem Unterteil 4 des Ventilkörpers 1 sind natürlich auch noch andere Kombinationen möglich, insbesondere auch solche Kombinationen, bei denen keine aufgeschrumpfte Hülse 6 vorgesehen ist, wie beispielsweise eine Kombination aus einer Schraubverbindung und einer Schweissverbindung. Prinzipiell ist es ferner möglich, mehr als zwei mechanische Verbindungen zwischen dem Oberteil 5 und dem Unterteil 4 vorzusehen.

## Patentansprüche

1. Ventil, insbesondere Auslassventil, für eine Brennkraftmaschine, insbesondere für einen Dieselmotor, mit einem Ventilkörper (1), der einen Ventilteller (2) und einen Ventilschaft (3) aufweist, wobei der Ventilkörper (1) ein Unterteil (4) und ein Oberteil (5) umfasst, welches sich in axialer Richtung an das Unterteil (4) anschliesst, **dadurch gekennzeichnet, dass** das Oberteil (5) und das Unterteil (4) mittels zweier mechanischer Verbindungen aneinander befestigt sind.

2. Ventil nach Anspruch 1, bei welchem das Oberteil (5) und das Unterteil (4) im Bereich des Ventilschafts (3) aneinander grenzen.

3. Ventil nach einem der vorangehenden Ansprüche, bei welchem eine der beiden mechanischen Verbindungen eine Hülse (6) umfasst, die auf den Ventilschaft (3) aufgeschrumpft ist und so angeordnet ist, dass sie die andere der beiden mechanischen Verbindungen umschliesst.

4. Ventil nach Anspruch 3, bei welchem am Ventilschaft (3) im Bereich der beiden axialen Enden (61) der Hülse (6) jeweils eine in Umfangsrichtung des Ventilschafts verlaufende Nut (7) oder eine Verjüngung (8) vorgesehen ist, sodass die axialen Enden (61) der Hülse (6) kontaktfrei bezüglich des Ventilschafts (3) sind.

5. Ventil nach einen der Ansprüche 3 oder 4, bei welchem die axialen Endbereiche (51,41) des Oberteils (5) und des Unterteils (4) bezüglich Ihres Durchmessers (DO,DU) so aufeinander abgestimmt sind, dass bei Betriebstemperatur eine im wesentlichen gleich starke Schrumpfverbindung zwischen dem Oberteil (5) und der Hülse (6) einerseits sowie dem Unterteil (4) und der Hülse (6) andererseits resultiert.

6. Ventil nach einem der Ansprüche 3-5, bei welchem die Hülse (6) Drehflügel (9) zum Rotieren des Ventilkörpers (1) um seine Längsachse (A) aufweist.

7. Ventil nach einem der vorangehenden Ansprüche, bei welchem eine der beiden mechanischen Verbindungen eine Schweissverbindung, insbesondere eine Reibschweissverbindung, ist.

8. Ventil nach einem der vorangehenden Ansprüche, bei welchem eine der beiden mechanischen Verbindungen einen am Ober- (5) oder am Unterteil (4) vorgesehenen Zapfen (11) umfasst, der mit einer im Unter- (4) oder Oberteil (5) vorgesehenen Ausnehmung (12) zusammenwirkt.

9. Ventil nach Anspruch 8, bei welchem die Wirkverbindung zwischen dem Zapfen (11) und der Ausnehmung (12) eine Schrumpfverbindung ist.

10. Ventil nach einem der vorangehenden Ansprüche, bei welchem eine der beiden mechanischen Verbindungen als Gewindeverbindung oder als Bajonettverschluss ausgestaltet ist.

11. Brennkraftmaschine, insbesondere Dieselmotor, speziell Grossdieselmotor, mit einem Ventil gemäss einem der vorangehenden Ansprüche.

## Claims

1. Valve, in particular an outlet valve, for an internal combustion engine, in particular for a diesel engine, comprising a valve body (1) having a valve plate (2) and a valve shaft (3), wherein the valve body (1) comprises a lower part (4) and an upper part (5) which adjoins the lower part (4) in the axial direction, **characterised in that** the upper part (5) and the lower part (4) are fastened to one another by means of two mechanical connections.

2. Valve in accordance with claim 1 in which the upper part (5) and the lower part (4) border on one another in the region of the valve shaft (3).

3. Valve in accordance with one of the preceding claims, in which one of the two mechanical connections comprises a sleeve (6) which is shrunk onto the valve shaft (3) and is arranged in such a manner that it surrounds the other one of the two mechanical connections.

4. Valve in accordance with claim 3 in which a groove (7) or a contraction (8) which extends in the peripheral direction of the valve shaft is provided at the valve shaft (3) in the region of the two axial ends (61) of the sleeve (6) in each case so that the axial ends (61) of the sleeve (6) are contact-free with respect to the valve shaft (3).

5. Valve in accordance with claim 3 or claim 4 in which the axial end regions (51, 41) of the upper part (5) and of the lower part (4) are matched to one another with respect to their diameter (DO, DU) in such a manner that at the operating temperature a substantially equally strong shrinkage connection results between the upper part (5) and the sleeve (6) on the one hand and between the lower part (4) and the sleeve (6) on the other hand.

6. Valve in accordance with one of the claims 3 to 5 in which the sleeve (6) has rotary vanes (9) for the rotation of the valve body (1) about its longitudinal axis (A).

7. Valve in accordance with one of the preceding claims in which one of the two mechanical connections is a welded connection, in particular a friction welded connection.

8. Valve in accordance with one of the preceding claims in which one of the two mechanical connections comprises a pin (11) which is provided at the upper part (5) or at the lower part (4) and which cooperates with a recess (12) which is provided in the lower part (4) or the upper part (5).

9. Valve in accordance with claim 8 in which the active contact between the pin (11) and the recess (12) is a shrunk connection.

10. Valve in accordance with one of the preceding claims in which one of the two mechanical connections is designed as a thread connection or as a bayonet lock.

11. Internal combustion engine, in particular a diesel engine, especially a large diesel engine, comprising a valve in accordance with one of the preceding claims.

## Revendications

1. Soupape, en particulier soupape d'échappement, pour un moteur à combusion interne, notamment pour un moteur Diesel, avec un corps de soupape (1) qui comporte une tête de soupape (2) et une tige de soupape (3), où le corps de soupape (1) comprend une partie inférieure (4) et une partie supérieure (5) qui fait suite dans la direction axiale à la partie inférieure (4), **caractérisée en ce que** la partie supérieure (5) et la partie inférieure (4) sont fixées l'une à l'autre au moyen de deux liaisons mécaniques.

2. Soupape selon la revendication 1, où la partie supérieure (5) et la partie inférieure (4) sont contiguës dans la zone de la tige de soupape (3).

3. Soupape selon l'une des revendications précédentes, où l'une des deux liaisons mécaniques comprend un manchon (6) qui est posé à chaud sur la tige de soupape (3) et qui est disposé de façon à entourer l'autre des deux liaisons mécaniques.

4. Soupape selon la revendication 3, où est prévue à la tige de soupape (3) au voisinage des deux extrémités axiales (61) du manchon (6) respectivement une rainure (7) ou une diminution (8) s'étendant dans la direction périphérique de la tige de soupape de telle sorte que les extrémités axiales (61) du manchon (6) sont sans contact par rapport à la tige de soupape (3).

5. Soupape selon l'une des revendications 3 ou 4, où les zones d'extrémité axiales (51,41) de la partie supérieure (5) et de la partie inférieure (4), en ce qui concerne leur diamètre DO, DU, sont accordées de telle sorte l'une à l'autre que lors de la température de fonctionnement, il en résulte une liaison par rétraction sensiblement de même force entre la partie supérieure (5) et le manchon (6), d'une part, et la partie inférieure (4) et le manchon (6), d'autre part.

6. Soupape selon l'une des revendications 3 à 5, où le manchon (6) présente des ailettes de rotation (9) pour faire tourner le corps de soupape (1) autour de son axe longitudinal (A).

7. Soupape selon l'une des revendications précédentes, où l'une des deux liaisons mécaniques est une liaison de soudure, notamment une liaison de soudure par friction.

8. Soupape selon l'une des revendications précédentes, où l'une des deux liaisons mécaniques comprend un pivot (11). prévu à la partie supérieure (5) ou à la partie inférieure (4) qui coopère avec un évidement (12) ménagé dans la partie inférieure (4) ou la partie supérieure (5).

9. Soupape selon la revendication 8, où la liaison active entre le pivot (11) et l'évidement (12) est une liaison par rétraction.

10. Soupape selon l'une des revendications précédentes, où l'une des deux liaisons mécaniques est réalisée comme liaison à filetage ou comme fermeture à baïonnette.

11. Machine à combustion interne, notamment moteur Diesel, en particulier grand moteur Diesel, avec une soupape selon l'une des revendications précédentes.
